# FASCICULE DE BREVET EUROPEEN

(11) **EP 1 649 189 B1**
(45) Date de publication et mention de la délivrance du brevet: **20.07.2011**
(21) Numéro de dépôt: 04742410.6
(22) Date de dépôt: 31.03.2004
(51) Int. Cl.: F16F 13/04, F16F 15/02

(54) **PROCEDE ET DISPOSITIF DE FILTRAGE ET D'ATTENUATION DES VIBRATIONS**
VERFAHREN UND VORRICHTUNG ZUM FILTERN UND DÄMPFEN VON SCHWINGUNGEN
METHOD AND DEVICE FOR FILTERING AND DAMPING VIBRATIONS

(30) Priorité: 01.08.2003 FR 0309571; 03.12.2003 FR 0314205
(43) Date de publication de la demande: 26.04.2006
(73) Titulaire: Artec Aerospace, 31840 Seilh (FR)
(72) Inventeur: CAPDEPUY, Marc, F-31840 Seilh (FR); VERDUN, Philippe, F-31840 Seilh (FR)
(74) Mandataire: Célanie, Christian
(86) Numéro de dépôt international: PCT/FR2004/000809
(87) Numéro de publication internationale: WO 2005/021995

(56) Documents cités:
- FR-A- 950 411
- FR-A- 2 194 897
- FR-A- 2 739 213
- US-A- 3 251 076
- US-A1- 2002 022 525

## Description

Le secteur technique de la présente invention est celui du filtrage et de l'atténuation vibro-acoustique des vibrations d'origine mécanique transmises entre deux structures afin de les protéger mutuellement de leur environnement vibratoire.

Tout élément ou structure, inclus dans un système mécanique comportant une source de vibrations d'origine mécanique, reçoit des excitations vibratoires et/ou acoustiques provenant de la source, modifiée voir amplifiée par la réponse dynamique de chacun des éléments structurels constituant le système.

Pour assurer la tenue mécanique du système, les structures ou les éléments doivent être reliés entre eux par des fixations intégrant une rigidité statique et dynamique suffisante.

Pour diminuer l'énergie vibratoire transmise d'une structure à une autre quand elles sont reliées mécaniquement, deux types de solutions connues sont utilisés à ce jour : filtrage et atténuation.

La première solution consiste à filtrer mécaniquement les excitations d'entrée de la structure à protéger. L'efficacité du système filtrant est intrinsèquement liée à la fréquence de résonance du système sous charge : plus ses fréquences de coupure sont basses, plus le système est efficace. Toutefois, cette souplesse causée par une fréquence de coupure basse, conduit à de forts débattements sous charge, incompatibles avec l'environnement proche et qui précipitent la ruine par fatigue du système.

Pour ce faire, le filtrage peut être obtenu en intégrant aux interfaces de la structure à protéger, des systèmes souples élastiques (lame, ressort métallique ou composite) ou hydraulique-élastiques (fluide) ou hyper-élastiques (élastomère, silicone, alliage spécifique).

La suspension élastique, bien qu'elle assure la tenue statique et dynamique avec des gains vibratoires et/ou acoustiques potentiels, présente une résonance propre très faiblement amortie, injectant à cette fréquence, des niveaux rédhibitoires dans la structure à protéger (déplacements ou accélérations en basse fréquence au niveau des modes résonnant).

Les brevets FR-2 674 590 et JP-2 658 887 décrivent des suspensions hydrauliques qui sont constituées de chambres remplies de fluide visqueux communicant par un canal étroit. Lorsque la suspension est sollicitée par un choc ou par des vibrations induisant des déplacements relatifs, le fluide va circuler préférentiellement vers une chambre ou vers une autre suivant la direction d'excitation, avec une fonction de laminage qui va convertir l'énergie vibratoire en échauffement local. L'incompressibilité du fluide participe à la tenue de la suspension et sa circulation permet un amortissement des efforts introduits. Ces suspensions sont largement utilisées dans le domaine automobile, en particulier pour découpler le châssis du train de roulement. Toutefois, elles ne fonctionnent que sur un seul degré de liberté et la viscosité du fluide ne permet pas d'assurer une performance du comportement sur une bande large de fréquence. Ces systèmes suspension/amortisseur sont réservés au filtrage en très basse fréquence.

Des suspensions hyper-élastiques sont constituées de blocs épais de matériaux élastomères suivant, par exemple, les brevets FR-2 704 612 ou FR-2 762 564. La souplesse de ces suspensions est incompatible avec le besoin de rigidité statique et dynamique et elle implique alors la mise en place de butées. Le comportement de ces systèmes, forcément triaxial, est complexe, voire aléatoire ce qui limite la prédiction du dimensionnement. De plus, leur comportement en haute fréquence se dégrade (effet de raidissement structurel) et leur architecture matériau supporte mal les niveaux injectés (vieillissement prématuré) ce qui impose de fortes marges de sécurité dans leur dimensionnement.

Pour pallier les inconvénients ci-dessus, des solutions de suspensions hyper-élastiques sont constituées de couches superposées alternées de matériau amortissant et de métal avec ou sans butée. Les lames travaillent alors en flexion (brevet FR-2 678 221), en cisaillement (brevet EP-0 155 209) ou en flambage (brevet FR-2 672 351), en assurant une fréquence basse de coupure et la tenue mécanique. Compte tenu de l'architecture du procédé d'amortissement (couches alternées de matériaux hyper élastiques et métalliques), les performances d'amortissement sont faibles. De plus, lorsque la butée est sollicitée sur le seul degré de liberté, la raideur augmente brutalement et réinjecte de forts niveaux vibratoires dans la structure.

Le document US2002/0022525 (correspondant aux préambules des revendications indépendantes 1 et 2) décrit une structure amortissante comprenant un corps creux en élastomère à l'intérieur duquel sont disposés deux éléments d'amortissement. Le corps est muni de deux couvercles auxquels sont fixés deux axes dont les déplacements doivent être amortis. Il s'agit donc d'une structure hyper élastique inapplicable dans le cas de l'invention où on vise un montage d'une raideur potentiellement non linéaire grâce à un profil géométrique évolutif favorisant l'établissement d'un contact progressif entre ses constituants.

Indépendamment du filtrage, pour réduire les nuisances vibratoires et acoustiques rayonnées par une structure mécanique, de multiples solutions connues sont basées sur le critère de séparation entre la fréquence de résonance de la structure et la fréquence de l'excitation en jouant sur les paramètres masse et raideur.

Une solution consiste à augmenter la masse de la structure par recouvrement des surfaces rayonnantes avec des matériaux à haute densité (par exemple des produits bitumineux). Cette solution présente une certaine efficacité sur la bande des hautes fréquences de la structure mais dégrade son comportement en basse fréquence. Elle entraîne de plus, une augmentation substantielle de l'encombrement et de la masse.

Une autre solution consiste à augmenter la raideur de la structure de manière à rejeter la fréquence des modes résonnants au-delà du spectre d'excitation. Cet objectif est difficile à atteindre car ces structures hyper-raides sont logiquement alourdies par les systèmes de raidissage : le rapport coût sur performance reste élevé. De plus, la résistance à la fatigue est réduite à cause des concentrations ponctuelles de contraintes avec l'apparition de nouveaux modes de résonance dans les hautes fréquences. Cette solution ne résout pas la problématique de résonance dans les hautes fréquences.

Une classe de solution initie la notion d'apport d'amortissement à partir de matériau viscoélastique précontraint. Cette solution permet de dissiper les vibrations des structures pouvant être à l'origine d'un rayonnement acoustique, grâce au recouvrement de la surface rayonnante par un sandwich de matériau viscoélastique / film métallique. Cette solution entraîne un surplus de masse pour des performances d'amortissement limitées.

Enfin, une solution, telle que définie dans un document international déposé par la demanderesse WO97/11451 permet d'accroître significativement l'amortissement des structures sur une large bande de fréquence. Cette technologie, judicieusement fixée en parallèle de la surface rayonnante d'une structure soumise à des excitations vibratoires, permet de dévier les ondes vibratoires, de les amplifier puis de convertir les énergies vibratoires en une autre forme d'énergie. La dissipation d'énergie, ainsi engendrée dans la structure par le dispositif parallèle, permet d'apporter un fort amortissement sur un grand nombre de modes résonnants avec un impact limité sur la masse et la raideur de la structure.

Cet état de l'art permet donc d'identifier d'un côté des solutions dites "séries" offrant une tenue statique et dynamique en assurant le filtrage sur une bande réduite de fréquences basses ou hautes; d'un autre côté, des solutions dites "parallèles" assurant une forte atténuation des réponses vibratoires des modes propres des structures sur une large bande de fréquence.

La demande internationale WO01/92754 décrit une poutre présentant une structure tout à fait particulière destinée à être insérée entre une structure vibrante et une structure fixe. Telle que présentée, sa conformation implique une forte rigidité statique et dynamique, incompatible avec un filtrage et une atténuation basse fréquence.

Ainsi, il n'existe pas de solutions technologiques "séries" permettant de combiner l'ensemble des fonctionnalités indiquées ci-dessus, à savoir un fort amortissement et un fonctionnement sur une large bande de fréquence.

C'est l'objet de la présente invention que de fournir un tel système.

L'invention a donc pour but de permettre un filtrage avec un important amortissement des amplifications aux fréquences de résonance entre deux structures, sur une très large bande de fréquence et d'amplitude d'efforts mécaniques appliqués.

L'invention a pour objet un procédé d'atténuation et de filtrage de l'amplitude des vibrations d'origine mécanique entre un premier et un second éléments structurels à découpler, caractérisé en ce qu'on réalise un filtrage de l'onde vibratoire incidente, cette fonction de filtrage étant réalisée par une structure d'interface dont la masse est celle du premier élément et dont l'élasticité est celle d'au mois une lame ou composant, reliant les éléments, ladite fonction étant associée à une atténuation réalisée par l'association d'une suspension série avec un dispositif amortisseur monté en parallèle de la suspension au moyen de ladite au moins une lame, par apport d'amortissement de l'onde vibratoire filtrée transmise audit élément (3) sur une très large bande de fréquence et d'amplitude d'efforts mécaniques appliqués à l'élément.

L'invention concerne également un dispositif de filtrage et d'atténuation des vibrations entre un premier élément soumis à une onde vibratoire incidente et un second élément rayonnant une onde vibratoire filtrée, caractérisé en ce qu'il comprend une structure d'interface de transfert d'énergie vibratoire constituée d'un ensemble de lames élastiques disposé en série entre les deux éléments et d'au moins un dispositif amortisseur fixé en parallèle audit ensemble pour assurer une filtration et une atténuation de l'onde vibratoire incidente.

Selon une première caractéristique additionnelle de l'invention, le dispositif amortisseur est constitué de deux armatures rigides distinctes permettant d'assurer ponctuellement ou continûment des fonctions de déviation, éventuellement par un effet de bras de levier, d'amplification des ondes vibratoires engendrées par l'ensemble de lames élastiques vers un matériau dissipatif interposé entre lesdites armatures, ledit matériau dissipatif assurant un amortissement dudit ensemble de lames élastiques.

Selon une autre caractéristique de l'invention, le dispositif dissipatif présente un profil linéique et est constitué d'un ensemble d'armatures rigides alignées et fixées par leurs bases sur au moins une lame, ou tout autre structure vibrante, et indépendantes entre-elles, de telle façon que leurs mouvements relatifs, correspondant à une amplification par effet de bras de levier de la réponse vibratoire de la structure d'interface, soient transmis par les extrémité desdites armatures rigides au matériau dissipatif.

Selon encore une autre caractéristique de l'invention, le dispositif amortisseur présente un profil linéique et volumique et est constitué d'un ensemble d'armatures rigides alignées et fixées par leurs bases sur au moins une lame , ou tout autre structure vibrante, et indépendantes entre elles de telle façon que leurs mouvements relatifs, correspondant à une amplification par effet de bras de levier de la réponse vibratoire de la structure d'interface, soient transmis par les extrémités des armatures à un composant dissipatif, sur lequel est montée une plaque de contrainte, plane ou non, continue ou non, pour transférer l'énergie vibratoire vers l'ensemble d'armatures.

Selon encore une autre caractéristique de l'invention, le dispositif amortisseur de profil surfacique est constitué d'une structure à raideur adaptée, isotrope ou non, continue ou non, homogène ou non, fixée rigidement sur au moins une lame, ou tout autre élément vibrant, tel que les ondes vibratoires déviées, localisées et amplifiées par sa structure interne soient transmises par la face supérieure de ladite structure à un composant dissipatif lui-même contraint sur sa surface supérieure par une plaque continue ou localement discontinue, apte à assurer au travers du composant dissipatif le transfert des énergies vibratoires vers ladite structure.

Selon encore une autre caractéristique de l'invention, le dispositif amortisseur est de révolution et est constitué d'un ensemble d'armatures rigides réparties cycliquement ou non autour d'une partie centrale et fixées rigidement ou non à une extrémité sur au moins une lame ou toute autre structure vibrante d'un côté, et indépendant à l'autre extrémité, de façon que les mouvements relatifs de ces armatures soient transmis à des composants dissipatifs, et de l'autre côté à une plaque de contrainte, continue ou non, apte à assurer au travers des composants dissipatifs le maintien de l'ensemble des armatures .

Selon encore une autre caractéristique de l'invention, le dispositif amortisseur monté entre les éléments est composé d'un ensemble élastique d'au moins deux sous-ensembles à profil évolutif continu ou non, ledit dispositif amortisseur présentant une géométrie interne apte à réaliser une déviation, éventuellement une amplification et une localisation des vibrations pour assurer une atténuation de la réponse vibratoire dudit ensemble élastique, et en ce que ledit ensemble élastique présente en même temps une fonction de support statique suffisamment rigide, et des fonctions dynamiques de filtrage à caractéristiques variables suivant le niveau du chargement appliqué et définissant une surface de contact évolutive, aux extrémités entre les sous-ensembles, lesdits sous-ensembles étant complétés par une zone dans laquelle sont insérés les composants dissipatifs.

Selon encore une autre caractéristique de l'invention, lesdits sous-ensembles se présentent sous la forme de lames élastiques présentant une raideur potentiellement non linéaire conférée par leur profil géométrique évolutif pour assurer un contact progressif de la lame avec le profil complémentaire de l'autre lame, afin d'assurer une fréquence de filtrage évolutive et un débattement relatif maîtrisé desdites lames en fonction de la charge dynamique appliquée.

Selon encore une autre caractéristique de l'invention, le dispositif amortisseur est de révolution et comprend au moins une lame élastique reliée rigidement au premier élément et au moins une lame élastique reliée rigidement au second élément, les lames étant au niveau de leurs extrémités libres reliées entre elles par l'intermédiaire d'un anneau élastique ou non et enroulées autour des couches de composants dissipatifs, et assurant ainsi en fonction de la charge dynamique appliquée la fonction de filtrage et d'atténuation non linéaire.

Selon encore une autre caractéristique de l'invention, les lames élastiques présentent une raideur potentiellement non linéaire grâce à leur profil géométrique évolutif et par le contact progressif entre les lames dont les profils sont mutuellement complémentaires de leur déformation maximale admissible respective, pour assurer en fonction de la charge dynamique appliquée la fréquence de filtrage évolutive et un débattement relatif maîtrisé voire limité des éléments.

Selon encore une autre caractéristique de l'invention, le composant dissipatif réalise la conversion de l'énergie vibratoire en une autre forme d'énergie, par exemple thermique par frottement entre matériaux ou avec des matériaux viscoélastiques, électrique avec des matériaux piézoélectriques, magnétique avec des matériaux magnéto-strictifs, ou toute autre forme d'énergie.

Selon encore une autre caractéristique de l'invention, la structure d'interface présente au moins deux dimensions et peut être formé par des assemblages de poutres, de barres droites ou courbes, de volumes pleins, de plaques planes ou de formes plus complexes et en ce que ses propriétés élastiques sont extraites à partir de matériaux élastiques, métalliques ou non, homogène ou non, isotropes ou anisotropes.

Selon encore une autre caractéristique de l'invention, le dispositif amortisseur de profil surfacique et notamment la structure intègre des propriétés d'isolation thermique et acoustique telles que par exemple des mousses alvéolaires ou composites, permettant audit dispositif amortisseur de conserver une performance amortissante sur une large gamme de température et de posséder, en plus, les performances intrinsèques d'un écran acoustique et d'un isolant thermique.

Selon encore une autre réalisation, le dispositif amortisseur comprend un assemblage de deux sous-ensembles de révolution, à profil évolutif continu ou non de type lame élastique, dont une au moins de leurs extrémités présente une surface de contact évolutive, l'ensemble étant complété par une zone dans laquelle sont insérés les matériaux dissipatifs.

Avantageusement, les lames élastiques présentent une raideur potentiellement non linéaire conférée par leur profil géométrique évolutif pour assurer un contact progressif de la lame avec le profil complémentaire de l'autre lame, pour assurer une fréquence de filtrage évolutive et un débattement relatif maîtrisé des lames en fonction de la charge dynamique appliquée.

Avantageusement encore, le composant dissipatif réalise la conversion de l'énergie vibratoire en une autre forme d'énergie, par exemple thermique par frottement entre matériaux ou avec des matériaux viscoélastiques, électrique avec des matériaux piézoélectriques, magnétique avec des matériaux magnéto-strictifs, ou toute autre forme d'énergie.

Un résultat de la présente invention réside dans le fait que le procédé de filtrage et d'atténuation de l'amplitude des phénomènes vibratoires d'origines mécaniques, transmis à, et/ou rayonnés par des structures vers un élément ou vers une autre partie de structure est remarquable en ce qu'il associe les fonctions de support, filtrage et amortissement sur une large gamme de fréquences de fonctionnement et de charge d'excitation.

Un autre résultat de l'invention réside dans le filtrage et l'atténuation de l'amplitude des phénomènes vibratoires d'origines mécaniques, transmis à, et/ou rayonnés par des structures vers un élément ou vers une autre partie de structure, est remarquable en ce qu'il réalise une fonction dite "série" en l'associant avec un processus dit en "parallèle", fonctionnant sur une large gamme de fréquences. Cette association en l'améliorant permet d'en élargir le champ d'application.

Un autre résultat de l'invention réside dans la maîtrise de la non-linéarité introduite dans la structure série et est remarquable en ce qu'elle permet de contrôler les débattements admissibles, ceci en fonction de la charge à appliquer sur cette structure.

Un autre résultat de l'invention réside dans un procédé de construction d'une suspension dite série d'un objet ou d'une structure quelconque, basé sur la multiplicité interne des dispositifs et remarquable en ce que ce procédé permet une utilisation de la suspension suivant un ou plusieurs degrés de liberté.

Un autre résultat de l'invention réside dans l'association d'une suspension dite série d'un objet introduisant des non-linéarités, avec le procédé dit parallèle est remarquable en ce qu'il permet de réunir les performances des deux dispositifs (large bande de fréquence, fort amortissement, forte charge d'excitation) dans un faible volume et pour une faible masse.

Un autre résultat de l'invention réside dans le filtrage par une suspension élastique, placée en série entre les structures à isoler, dont la souplesse potentiellement non linéaire, permet de maximiser la fonction filtrante au-delà de sa propre fréquence de résonance.

Un autre résultat encore de l'invention réside dans le fait que la suspension élastique permet d'assurer le maintien statique de la charge et des amplitudes de déplacements dynamiques précis et limités sur la large gamme de fréquence et de charges d'excitation.

Un autre résultat encore de l'invention réside dans le fait que la suspension élastique série assure une déviation du sens de vibration de l'onde incidente vers un dispositif amortisseur placé en parallèle de cette suspension.

Un autre résultat encore de l'invention réside dans la capacité du dispositif amortisseur d'apporter de l'amortissement structurel dans la suspension élastique et d'en atténuer, de ce fait, sa réponse vibratoire.

Avantageusement, l'association de deux structures avec un dispositif amortisseur permet de convertir les énergies vibratoires associées à l'onde incidente en une autre forme d'énergie dissipée localement. Les caractéristiques d'amortissement du dispositif global ainsi réalisé, sont alors celles du dispositif amortisseur associé. Partant de cet état de fait, la demanderesse a mené des recherches visant à améliorer les dispositifs amortisseurs parallèles précédemment développés par elle et donnant déjà une forte atténuation de la réponse vibratoire des modes résonnants et de déformation de la suspension élastique, pour développer ses performances dans le cadre d'une association avec un dispositif série, élargissant ainsi son champ d'application.

L'introduction de non-linéarités et de leur maîtrise permet à la suspension élastique série de limiter les débattements de l'élément suspendu, dans le cas de forte charge d'excitation, ceci sans re-injecter de perturbations ni chocs supplémentaires dans l'élément.

L'association de non-linéarités avec les dispositifs amortissants parallèles connus est remarquable en ce qu'elle améliore l'exploitation de ses caractéristiques d'amortissement, notamment dans le cas de forte charge d'excitation.

L'association d'une suspension série non-linéaire avec les dispositifs amortissants parallèles connus est remarquable en ce qu'elle permet de réaliser une suspension ayant de bonnes performances d'amortissement (large bande de fréquence, fort amortissement, forte charge d'excitation) dans un volume restreint avec un faible poids.

La multiplicité interne des dispositifs amortisseurs et des non-linéarités est remarquable en ce qu'elle donne à la suspension les bonnes performances déjà mentionnées, ceci suivant un ou plusieurs degrés de liberté.

La géométrie interne de la suspension série, réalisée avec des éléments mécaniques, est remarquable en ce que le positionnement statique qu'elle assure n'évolue pas dans le temps comme c'est le cas des suspensions séries connues composée d'élastomères.

D'autres caractéristiques, détails et résultats de l'invention apparaîtront plus clairement à la lecture du complément de description qui va suivre, donné à titre d'exemple, en relation avec des dessins sur lesquels :
- les figures 1 et 2 représentent un premier exemple de réalisation d'un matériau selon l'invention dans des configurations de niveau d'ondes vibratoires transmises,
- les figures 3a et 3b représentent un autre exemple de réalisation du dispositif selon l'invention,
- la figure 4 illustre le principe d'amortissement unidirectionnel selon l'invention,
- les figures 5 à 7 illustrent des variantes du principe permettant un amortissement et une dissipation bidirectionnelle,
- la figure 8 représente une vue d'un autre exemple de réalisation du composant dissipatif multidirectionnel,
- la figure 9 est une coupe AA de la figure 8,
- les figures 10 et 11 illustrent un autre exemple de réalisation du dispositif selon l'invention, et
- les figures 12 et 13 illustrent une extension du concept permettant un amortissement et une dissipation multidirectionnelle.

Pour mieux illustrer le procédé et le dispositif selon l'invention, on va considérer l'application d'une onde, d'origine mécanique, vibratoire, micro-vibratoire ou nano-vibratoire en entrée par sa surface incidente et une onde vibratoire, potentiellement sonore, en sortie par sa surface rayonnante.

Selon le comportement dynamique d'un matériau placé entre une surface incidente et rayonnante, l'onde transmise sera plus ou moins atténuée. Ainsi, lorsque le comportement du matériau est «neutre» devant le champ d'excitation, l'onde incidente est intégralement transmise à la surface rayonnante. A l'inverse, la souplesse du matériau peut générer une augmentation de l'onde rayonnante (surtension à la résonance du système), avant que le filtrage ne devienne efficace.

L'invention vise le filtrage de l'onde incidente et l'atténuation de l'onde vibratoire générée par la surface rayonnante d'un matériau constituant un élément soumis à des vibrations, d'origine mécanique, au niveau de la surface incidente. Ledit matériau est composé d'une association de structures élastiques et dissipatives définissant une structure d'interface de transfert d'énergie vibratoire.

Par matériau à structure dissipative, on entend un matériau dont les particules génèrent des efforts non proportionnels aux déplacements relatifs qui leur sont imposés et qui ne restituent pas la totalité des énergies de déformations transmises.

Suivant l'invention, le matériau dissipatif peut réaliser la conversion de l'énergie vibratoire en une énergie thermique à partir de ses caractéristiques viscoélastiques, par frottement entre deux structures ou tout autre mode.

Suivant l'invention, le matériau dissipatif peut réaliser la conversion de l'énergie vibratoire en une énergie électrique à partir de ses caractéristiques piézoélectriques ou magnéto-strictives.

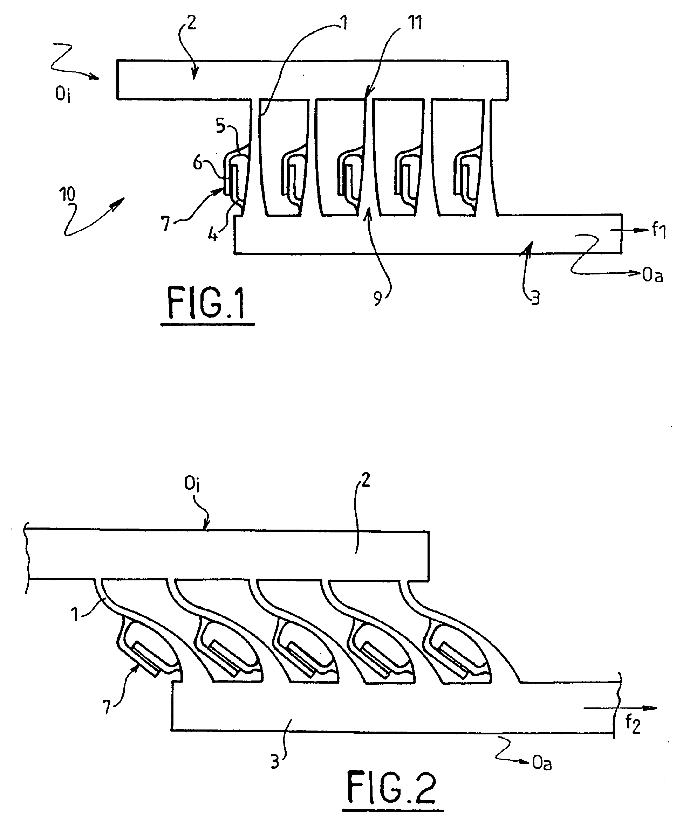

On a représenté sur les figures 1 et 2, un assemblage composé d'une combinaison par juxtaposition ou superposition ou emboîtement transversal ou longitudinal de motifs géométriques pluridimensionnels qui réalise une structure anisotrope dissymétrique, c'est à dire présentant suivant l'un quelconque de ses axes des motifs pleins dissymétriques ou non, et des cavités dissymétriques ou non qui contribuent à perturber la transmission de l'onde, quelle que soit sa direction originelle. La structure selon la présente description est un corps géométrique entrant dans la composition de la structure du dispositif et dans la mise en oeuvre du procédé. Cette structure a au moins deux dimensions et peut être formée par des assemblages de poutres, de barres droites ou courbes, de volumes pleins, de plaques planes ou de formes plus complexes, ainsi qu'il sera en détail ci-après.

Sur la figure 1, on a schématisé le principe retenu pour amplifier les déformations et basé sur l'utilisation d'un matériau ou structure 10 fortement anisotrope. La structure d'interface 10 est interposée entre un premier élément 2 fixé rigidement à un support (non représenté) et un second élément 3 soumis à des vibrations. Cette structure 10 est constituée d'un ensemble de lames élastiques 1 et de dispositifs amortisseurs 7. On donne à ces lames 1 une géométrie et une orientation qui pilotent l'évolution de la non-linéarité de raideur en fonction de leur allongement, on voit que les lames 1 présentent une partie 9 fixée à l'élément 3 et une autre partie 11 fixée à l'élément 2. Sur chaque lame, on implante un dispositif amortisseur 7 constitué de deux armatures 4 et 5 dont les extrémités libres sont réunies à l'aide d'une structure dissipative 6.

Bien que le système soit complètement bijectif, on note, par souci de simplification, valable pour l'ensemble des réalisations décrites ci-après, l'élément 2 comme l'élément par lequel est transmis l'onde vibratoire incidente et l'élément 3, comme l'élément transmettant l'onde vibratoire rayonnante.

Lorsque l'effort f1 transmis par l'onde d'origine vibratoire Oi est appliqué, les lames, en déviant le sens vibratoire incident, se déforment suivant un mécanisme établi d'avance sur leur propre comportement modal comme représenté à titre d'illustration sur la figure 2. En parallèle de chaque lame, le dispositif amortisseur 7 permet grâce aux armatures 4 et 5 judicieusement positionnées sur chaque lame, de dévier, puis éventuellement d'amplifier ces énergies. Ces dernières sont enfin transmises dans la ou les directions privilégiées au sein de la structure dissipative 6, par l'intermédiaire des armatures 4 et 5.

Sous l'action du chargement dynamique et grâce aux types de déformation potentiels des lames 1, fonction de leur profil évolutif, la distribution des énergies vibratoires et le niveau des contraintes internes dans les lames 1 et par conséquent leur raideur, sont modifiés. Ce mécanisme étant établi par avance, le dispositif amortisseur 7, à efficacité large bande, est donc toujours capable de dissiper ces énergies. Sur la figure 1, où on considère le taux de déformation des lames 1 faible, la structure 10 est suffisamment, souple, pour supporter statiquement l'élément 3, limiter ses débattements et filtrer à basse ou haute fréquence la majorité des efforts F1. On utilise alors les propriétés d'amortissement à basse ou haute fréquence et à faible déformation de la structure dissipative. Sur la figure 2, sous un fort chargement dynamique F2, la raideur des lames 1 croît très fortement avec leur taux de déformation. La structure 10 est donc raidie, ce qui limite les débattements au niveau souhaité. Mais sous l'action combinée de la masse dynamique de l'élément 3, cette structure reste suffisamment souple pour filtrer dès les basses fréquences. On utilise alors les propriétés d'amortissement à basse ou haute fréquence et à taux de déformation limité de la structure dissipative.

Les caractéristiques de raideur, par extension de tenue, et d'amortissement de l'ensemble restent donc respectivement pilotées, et cela quel que soit le niveau ou la fréquence de l'excitation dynamique, par celles de la suspension et de la structure dissipative.

Avec la conformation anisotrope présentée ci-dessus, il est donc possible de réaliser une suspension dont la raideur est faible à basse fréquence et à bas niveau de sollicitations et beaucoup plus forte lorsque les efforts appliqués sont plus importants. Cette forte non-linéarité géométrique permet de réaliser des suspensions souples amorties tout en intégrant une rigidité à haut niveau de déformation. Les butées des plots amortisseurs ne sont plus nécessaires. De plus, les variations brusques de raideurs liées à des butées mécaniques de fin de course (butée franche) n'existent plus. Les phénomènes de chocs limitant les durées de vie des équipements sont ainsi supprimés.

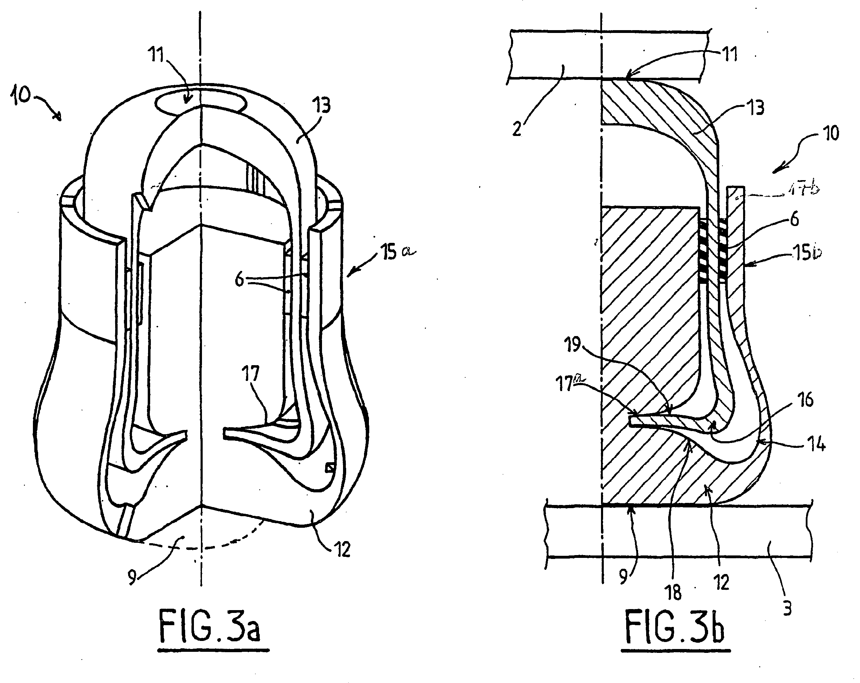

Les figures 3a et 3b représentent en coupe un autre mode de réalisation de l'invention sous la forme d'une structure 10 placée entre la surface incidente 11 de l'élément 2 et une surface rayonnante 9 de l'élément 3. La structure 10 est constituée de deux sous-ensembles 12 et 13 emboîtés l'un dans l'autre à une des extrémités 17. A une autre extrémité 15, le sous-ensemble 13 est partiellement pris en sandwich entre les armatures du sous-ensemble 12 grâce au composant dissipatif 6. Entre les extrémités 17a et 17b, les éléments 14 et 16 constituent les lames élastiques de la structure d'interface. Ces lames 14 et 16 représentent respectivement les parties centrales des sous-ensembles 12 et 13, et elles présentent un profil de section évolutive, dont la base est fermement fixée respectivement aux surfaces incidente 11 et rayonnante 9. Ce profil peut être continu ou discontinu, axisymétrique ou dissymétrique.

L'adoption d'une lame élastique 14 ou 16, par exemple, en matériau composite, tel que les fibres de verre ou carbone, noyées dans une matrice synthétique polymérisée, permet d'obtenir des caractéristiques mécaniques fortement anisotropes et résistantes sous de fortes charges.

Les liaisons d'extrémités entre les sous-ensembles 12 et 13 permettent de pré-contraindre les lames en flexion ou traction ou torsion, de manière à ce que, sous l'effet du poids de l'élément 3, le système se trouve en repos dans une zone de fonctionnement à raideur moyenne.

L'ensemble des caractéristiques dimensionnelles et les matériaux constituant les lames 14 et 16 concourent à exacerber la non-linéarité de leur comportement en fonction de la charge dynamique appliquée.

Lorsqu'un chargement dynamique est transmis entre les surfaces incidente 11 et rayonnante 9, les lames 14 et 16 se déforment suivant différents mécanismes préétablis (flexion, flambage, torsion, traction,...) en fonction du niveau et de la fréquence de l'excitation. Ces différents modes de déformation induisent une modification de la raideur du matériau élastique. Les fréquences propres des lames 14 et 16 sont donc modifiées, ce qui permet de contrôler et d'étendre les fréquences de filtrage du procédé.

Afin d'augmenter le comportement dynamique non linéaire de l'élément filtrant, la base du sous-ensemble 12 dispose au niveau de l'extrémité 17a (fig. 3b), d'un profil 18 présentant une surface de contact potentielle avec le profil 19 de la lame 16, en épousant la forme de la déformée maximale admissible de la lame 16. Le contact n'est pas établi lorsque le taux de déformation de la lame 16 est faible. Au-delà d'un certain seuil, le contact est initié sur une faible portion de la lame 16. Le comportement de la lame est alors faiblement modifié. Si le chargement dynamique augmente, la surface de contact augmente progressivement et le comportement dynamique de la lame 16 est fortement perturbé avec un impact non négligeable sur l'augmentation de raideur.

L'impact d'un tel apport de non-linéarité du type contact permet d'atteindre des forts niveaux de chargement dynamique, que ce soit en basse et haute fréquence sans risque d'endommagement du dispositif. La complémentarité du profil 18 du sous-ensemble 12 et l'état déformé de la lame 16 permet d'éviter toute mise en contact brutal à l'inverse des butées franches connues.

La perturbation de la transmission de l'onde entre la surface incidente 11 et rayonnante 9 est déviée vers le dispositif amortisseur 15b, dans une zone assurant des déplacements ou rotations relatifs maximum des lames suivant leur déformation. Les dispositifs amortisseurs 15b pris en sandwich entre une partie rigide du sous-ensemble 12, et les lames élastiques 14 et 16 permettent d'absorber les énergies relatives par l'intermédiaire d'une liaison adéquate quelle soit rigide, rotoïde, sphérique ou souple suivant des directions privilégiées.

L'ensemble du dispositif décrit remplit dans sa globalité la fonction d'amortissement selon l'invention, permettant d'assurer les fonctionnalités de déviation, d'amplification et de conversion des énergies d'origine vibratoire et /ou acoustiques.

Ainsi, dans l'application qui vient d'être décrite, les dispositifs amortisseurs 15b réalisent une dissipation de l'énergie des vibrations issues des lames 14 et 16 grâce à l'ajout d'un matériau viscoélastique 6 dans des zones 15 où l'énergie de l'onde vibratoire est concentrée par la micro-géométrie de ce matériau. La structure du matériau permet de dévier et de privilégier un ou des degrés de liberté du matériau pour lequel l'amortissement viscoélastique est le plus efficace. L'application de l'invention permet donc de dévier l'énergie de l'onde vibratoire incidente dans les zones 15 des lames 14 et 16, puis de la dissiper sous une autre forme dans des zones 15 bien définies et selon des directions qui impliquent certains modes de vibration d'origine mécanique de la paroi rayonnante.

Les propriétés internes du matériau composite que constitue la zone 15 influencent la réponse vibratoire des lames 14 et 16 en amortissant ses vibrations. Dès lors, le procédé et le dispositif selon l'invention dispose des fonctionnalités suffisantes pour répondre au besoin de filtrage et d'amortissement souhaité par l'utilisateur.

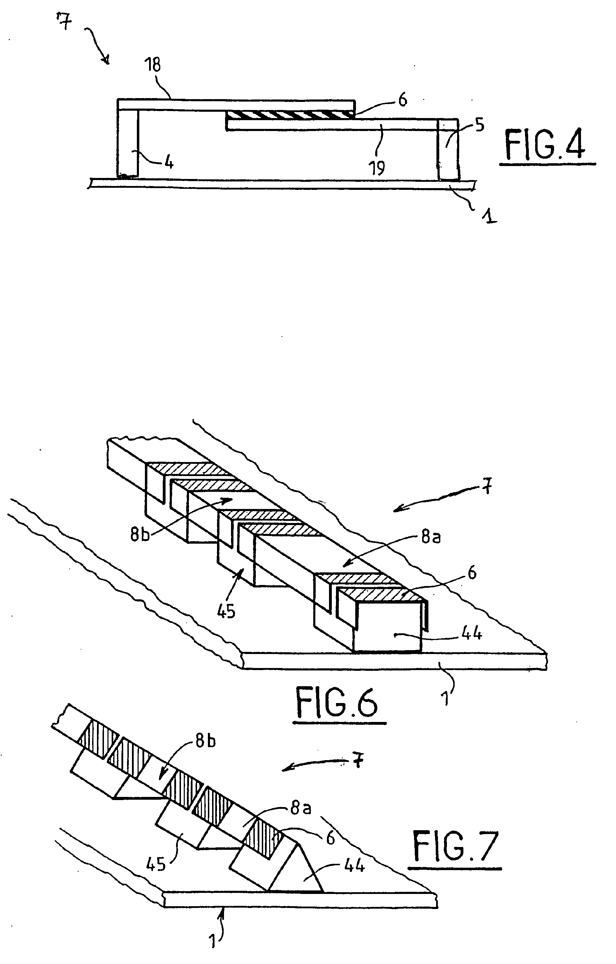

Selon l'invention, le dispositif d'amortissement parallèle, utilisé dans la suspension série ou avec toute autre structure, peut prendre différents profils ou géométries, dès lors qu'il respecte le procédé et le dispositif d'amortissement selon l'invention. La forme la plus simple est représentée sur la figure 4, où le matériau 6 convertisseur de l'énergie peut être agencé entre les deux plaques rigides 18 et 19 du dispositif amortisseur 7, lui-même lié à la lame 1 ou tout élément vibrant par l'intermédiaire de plaques rigides 4 et 5 si on se réfère au mode de réalisation selon la figure 1. Le mode de fonctionnement privilégié pour la conversion correspond à une déviation des énergies vibratoires issues de la lame 1, amplifiées par les éléments 4 et 5, vers les plaques 18 et 19, qui transfèrent ces énergies vers le matériau dissipatif. Dans le cas présenté, la dissipation est engendrée par un cisaillement dynamique du matériau 6.

Dès lors que les énergies vibratoires le justifient, le procédé peut intégrer une fonctionnalité d'amplification des vibrations avant qu'elles soient transmises aux plaques 18 et 19, en favorisant l'effet bras de levier des plaques 4 et 5. Cette amplification peut être aussi réalisée soit par la géométrie interne de la suspension série elle-même ou de la structure sur lesquelles le dispositif est monté en parallèle, soit par le fait de le fixer entre deux points, non contigus, offrant un différentiel suffisant de déplacements ou de déformations.

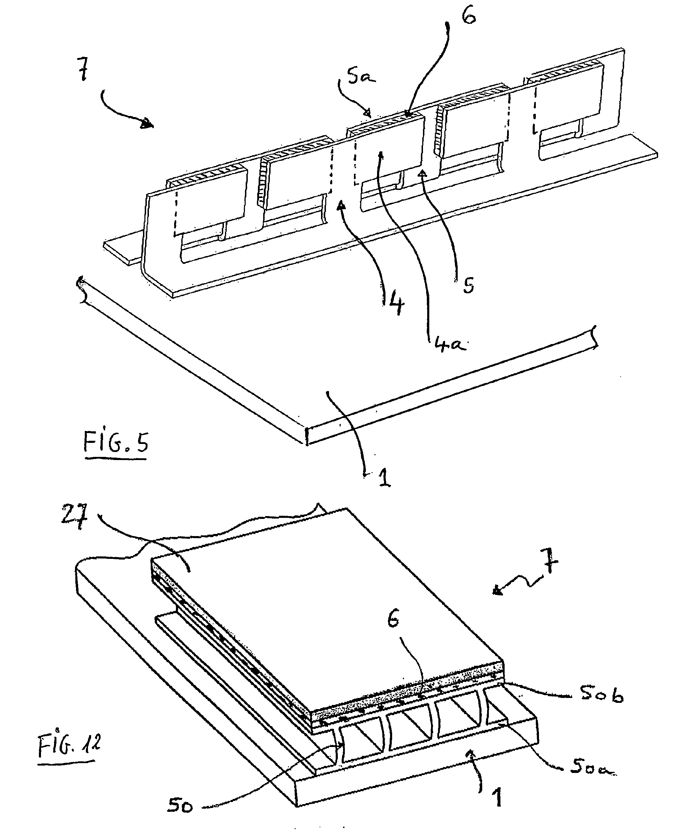

A titre d'exemple, les figures 5, 6 et 7 illustrent de manière non exhaustive, différentes formes que peut prendre le dispositif d'amortissement parallèle amélioré pour être utilisé dans la suspension série ou dans toute autre structure.

La figure 5 illustre une réalisation du dispositif amortisseur 7 dans laquelle les armatures 4 et 5 présentent un profil en T, reliées à leur base aux lames 1 et entre lesquelles est intégré, au niveau de leur extrémité respective, le matériau dissipatif 6.

Les figures 6 et 7 illustrent de manière non exhaustive, des formes particulières que peut prendre le dispositif d'amortissement parallèle 7. Les réalisations sont obtenues à l'aide d'un ensemble d'armatures rigides 44 et 45 alignées, fixées à leurs embases sur la lame 1 ou tout autre structure élastique et indépendantes entre-elles au niveau de leurs extrémités supérieures. A ces extrémités, leur mouvement relatif correspond à une amplification par effet bras de levier de la réponse vibratoire du composant élastique 1 et est transmis à la surface inférieure du matériau dissipatif 6. La face supérieure de ce matériau dissipatif 6 est maintenue par une plaque de contrainte rigide continue ou non continue 8a et 8b. Les déformations relatives subies par le matériau dissipatif, maximales d'un coté et nulles de l'autre, permettent de convertir efficacement un fort niveau d'énergie vibratoire.

Dans les exemples représentés aux figures 4, 5, 6 et 7, la déviation, l'amplification et la conversion sont réalisées par une mise en oeuvre, dite linéique, des dispositifs dans le sens où elle favorise un traitement bidirectionnel. D'autres formes d'allure surfacique sont identifiées dès lors qu'elles permettent un traitement multidirectionnel.

Ainsi, une première forme surfacique du dispositif amortisseur présentée en figure 12 est une déclinaison du composant dissipatif 6 monté sur la lame 1. La structure 50 continue ou non, constituée de matériau isotrope ou non, homogène, agrégataire ou composite, est fixée rigidement par sa base 50a à la lame 1 soumis à des vibrations. De par ses caractéristiques matériaux et géométriques, on donne à la structure 50 une raideur judicieuse en flexion et cisaillement pour dévier, amplifier les énergies vibratoires de la structure rayonnante. Sa face supérieure 50b est quant à elle suffisamment souple pour se déformer telle une membrane. Ces déformations sont une résultante des déformations de l'élément vibrant 3, amplifiées par la géométrie et le comportement de la structure 50.

La peau externe de la face supérieure 50b est reliée à une plaque de contrainte 27 par l'intermédiaire d'un composant dissipatif 6.

La plaque de contrainte 27, continue ou non, dense et de faible épaisseur, dispose d'une raideur en membrane élevée et faible en flexion, à l'inverse de la face supérieure 50b.

Ces différences de modes et d'amplitude de déformation imprime au matériau dissipatif 6, de forts niveaux de déformation interne sur toute la surface de traitement et assure ainsi une conversion performante des énergies vibratoires.

On notera de plus que les motifs particuliers de la structure 50 en privilégiant une souplesse en flexion/compression en combinaison avec une plaque de contrainte 27 rigide et dense constitue un ensemble « masse-ressort » avec des qualités intrinsèques d'un écran acoustique offrant une atténuation de la transmissibilité acoustique.

Le dispositif surfacique qui vient d'être décrit, comme l'ensemble des dispositifs surfaciques présentés ci après, dupliqués judicieusement sur la surface dont la réponse vibratoire est à atténuer, est particulièrement adapté à l'amortissement et l'atténuation vibro-acoustique de plaques de grandes dimensions, par exemple des tôles minces de carrosserie.

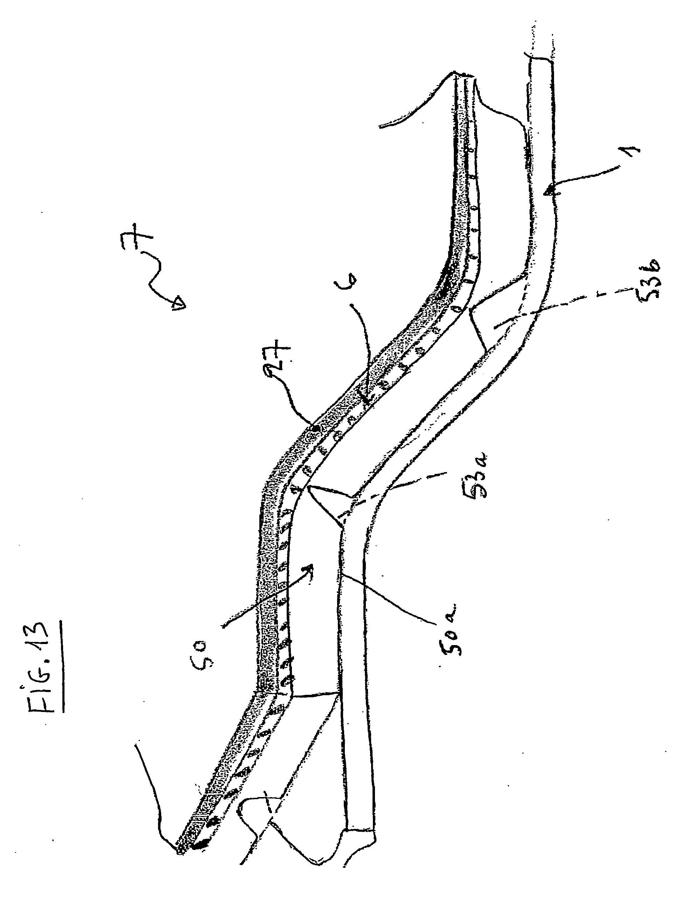

Pour adapter ce dispositif surfacique au traitement des plaques courbes ou gauches, la figure 13 propose une variante de dispositif amortisseur 7. La face inférieure de la base 50a de la structure 50, de conformation anisotrope, est alors découpée suivant des lignes ou courbes sécantes ou non, 53a et 53b.

Compte tenu des faibles raideurs en flexion de la plaque de contrainte 27 et du matériau dissipatif 6, l'ensemble 7, lors de sa mise en place, est alors capable de s'adapter au profil géométrique plan ou gauche de la lame vibrante 1. Une fois lié rigidement à cette structure 50 par l'intermédiaire de la base 50a, le dispositif 7 réintègre l'ensemble des caractéristiques et performances du concept générique présenté en figure 12.

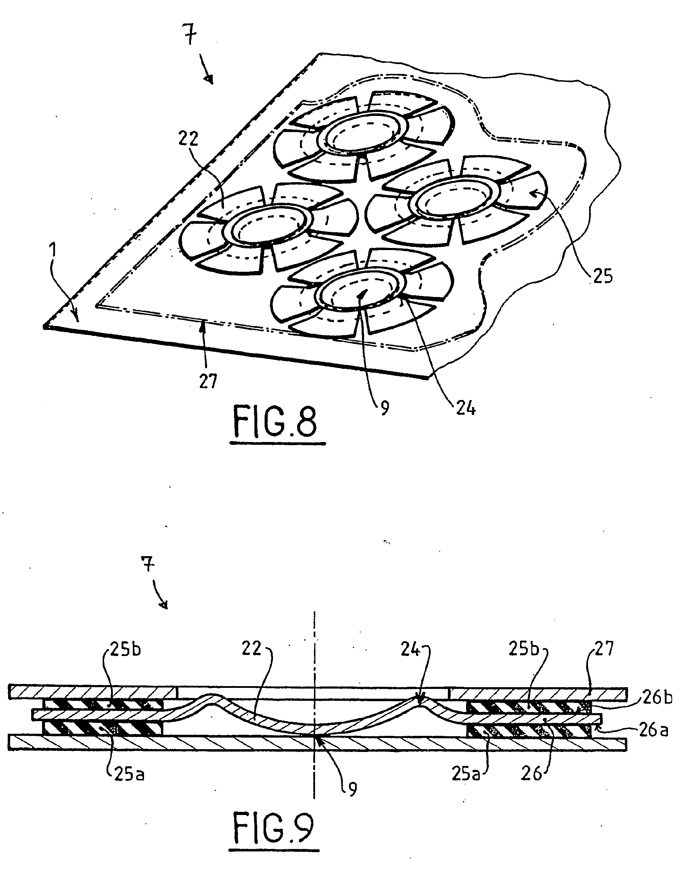

Sur les figures 8 et 9, on a représenté une forme surfacique 7 en "marguerite" dans laquelle à titre d'exemple applicable aussi pour les autres formes, le matériau dissipatif 6 décrit précédemment peut être formé par des éléments viscoélastiques, piézoactifs, magnétostrictifs, ou autre possédant une fonction de conversion d'énergie en une autre forme d'énergie. Ces éléments convertissent alors l'énergie vibratoire en énergie thermique, électrique, magnétique ou autre.

Dans cette réalisation, le dispositif amortisseur 7, présenté en coupe sur la figure 9 est constitué d'un ensemble de lames indépendantes 22, solidaires au niveau de leur partie centrale. Cette partie centrale est liée, par l'interface rigide 9, à la lame élastique 1, ou tout autre structure vibrante, dont la réponse vibratoire est à atténuer. Chaque lame 22 est munie d'au moins une ondulation 24 permettant d'amplifier dans des directions privilégiées les mouvements vibratoires perçus au niveau de l'interface 9. La surface plane inférieure 26a à l'extrémité de chaque lame 22 est reliée à la lame 1 par l'intermédiaire d'un composant dissipatif 25a. La surface plane supérieure 26b à l'extrémité de chaque lame 22 est reliée à une plaque de contrainte 27 par l'intermédiaire d'un autre composant dissipatif 25b. La plaque de contrainte est continue et permet ainsi de relier par l'intermédiaire du composant dissipatif 25 une multitude de motifs « marguerite » comme cela a été schématisé sur la figure 8.

Ainsi, la conformation permet d'amplifier l'ensemble des mouvements relatifs de la lame 1, vus au niveau des interfaces 9, des extrémités planes des lames 22 et de la plaque de contraintes 27. Cette amplification est déviée au sein du matériau dissipatif pour une conversion d'énergie performante.

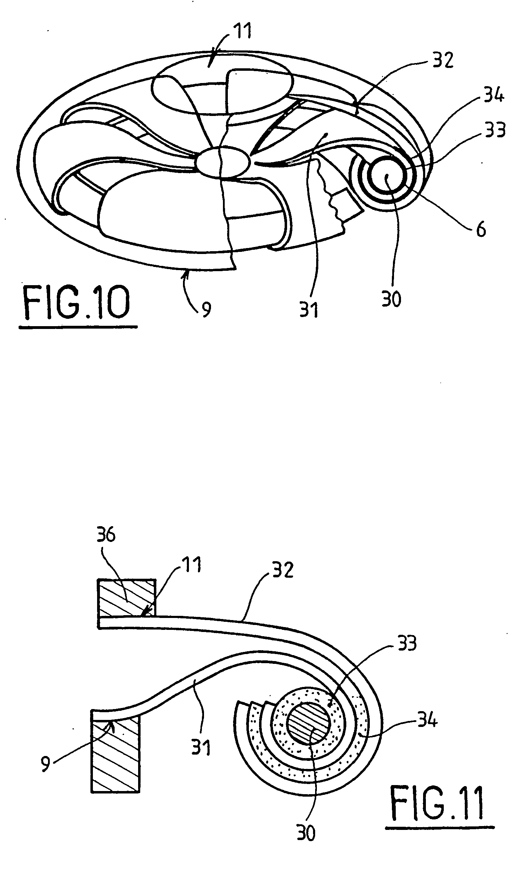

Sur les figures 10 et 11, on a représenté, par extension et association judicieuse des caractéristiques du dispositif amortissant, une variante du dispositif de filtrage et d'atténuation entre une surface incidente 9 et une surface rayonnante 11 découlant de l'exemple de réalisation selon la figure 3. Chaque motif, de symétrie cyclique, est ainsi constitué d'un assemblage judicieux autour d'un anneau 30, de lames élastiques 31 et 32. Cet assemblage intègre une fonction amortissante par l'intermédiaire de matériaux dissipatifs 33 disposé entre l'anneau 30 et la lame 31 et de matériaux dissipatifs 34 disposé entre les lames 31 et 32, constituant la structure d'interface. Dans ce cas, chacun des motifs dispose de bases constituant ses surfaces incidente et rayonnante, vis à vis des motifs environnants.

Les lames 31 et 32 présentent un profil de section évolutive, convergeant vers des parties centrales fermement fixées aux surfaces incidente et rayonnante, telles les surfaces respectives 9 et 11 représentées sur la figure 3. Ce profil peut être continu ou discontinu, axisymétrique ou dissymétrique.

L'anneau 30 de liaison des lames 31 et 32 permet de pré-contraindre, à partir de ces propriétés élastiques, les lames en flexion ou traction ou torsion, de manière à ce que, sous l'effet du poids de l'élément pesant 36 induisant la surface rayonnante 11, le système se trouve en repos dans une zone de fonctionnement à faible raideur.

L'ensemble des caractéristiques géométriques et matériau des lames 31 et 32 concourent à exacerber la non-linéarité de son comportement en fonction de l'onde vibratoire. Sur la figure 11, on voit en coupe que les lames 31 sont enroulées autour de l'anneau 30 à une extrémité et sont réunies à l'autre extrémité pour délimiter la surface incidente 9. De la même manière, le profil intérieur des lames 32 présente une prédisposition à épouser le profil extérieur des lames 31 lorsque ces dernières atteignent une amplitude de déformation maximale. Les lames 32 sont réunies à l'autre extrémité pour délimiter la surface rayonnante 11.

Lorsqu'un chargement dynamique est transmis entre les surfaces incidente 9 et rayonnante 11, les lames se déforment suivant différents mécanismes préétablis (flexion, flambage, torsion, traction,...) en fonction de leur profil initial, du niveau et de la fréquence de l'excitation. Ces différents types de déformation induisent une modification de la raideur du dispositif de filtrage.

Les fréquences propres des lames sont donc modifiées, ce qui permet de contrôler et d'étendre les fréquences de filtrage de l'ensemble.

Afin d'augmenter le comportement dynamique non-linéaire de l'élément filtrant, le profil intérieur de la lame 32 présente une surface de contact potentielle avec la lame 31, en épousant la forme de la déformée maximale admissible de la lame 31. Le contact n'est pas établi lorsque le taux de déformation de la lame 31 est faible. Au-delà d'un certain seuil, le contact est initié sur une faible portion de la lame 31. Le comportement de la lame est faiblement modifié. Si le chargement dynamique augmente, la surface de contact augmente progressivement et le comportement dynamique de la lame 31 est fortement perturbé avec un impact non négligeable sur l'augmentation de raideur, et donc sur l'adaptativité de la fonction découplage.

L'ensemble des déformations des lames 31 et 32 génèrent des rotations relatives autour de l'anneau 30. Les énergies de déformations sont donc déviées et amplifiées dans cette zone. La présence de matériaux amortissants entre les interfaces des éléments 30, 31 et 31, 32 permet d'assurer la fonction de conversion des énergies d'origine vibratoire et/ou acoustique en une autre forme d'énergie, permettant d'intégrer de l'amortissement dans la structure sur laquelle le dispositif est monté.

Cet exemple particulier est utilisable pour amortir les vibrations des machines tournantes ou toutes autres structures vibrantes. Les lames 31 peuvent être reliées à un moyen de jonction au niveau de l'élément 3 par la surface 9 et les lames 32 au niveau de l'élément 2 par la surface 11.

Il va sans dire que des outils de calcul de dimensionnement et des méthodes permettent d'adapter la géométrie des lames et l'ensemble des composants dissipatifs décrits afin d'obtenir un optimum de performance. La géométrie de la lame est établie de façon à contrôler les différentes fréquences de filtrage souhaitées. Suivant l'état de déformation du dispositif selon l'invention (sous un chargement appliqué), on comprend que l'on passe d'une configuration de suspension avec des fréquences de coupure données à un autre état pour lequel les fréquences de coupure sont modifiées. Lorsqu'on augmente le chargement, on recherche une propriété de non-linéarité qui permet de limiter l'amplitude des débattements ou déplacements sous des forts niveaux de chargement.

## Revendications

1. Procédé d'atténuation et de filtrage de l'amplitude des vibrations d'origine mécanique entre un premier (2) et un second (3) éléments structurels à découpler, ledit procédé réalisant un filtrage de l'onde vibratoire incidente, cette fonction de filtrage étant réalisée par une structure d'interface (10) dont la masse est celle du premier élément (2) et dont l'élasticité est celle d'au moins une lame (1) ou composant, reliant les éléments (2, 3), **caractérisé en ce que** ladite fonction est associée à une atténuation réalisée par l'association d'une suspension série avec un dispositif amortisseur (7) monté en parallèle de la suspension au moyen de ladite au moins une lame (1), par apport d'amortissement de l'onde vibratoire filtrée transmise audit élément (3) sur une très large bande de fréquence et d'amplitude d'efforts mécaniques appliqués à l'élément (2) .

2. Dispositif de filtrage et d'atténuation des vibrations entre un premier élément (2) soumis à une onde vibratoire incidente et un second élément (3) rayonnant une onde vibratoire filtrée, ledit dispositif comprenant une structure d'interface (10) de transfert d'énergie vibratoire, **caractérisé en ce** ladite structure d'interface (10) est constituée d'un ensemble de lames élastiques (1) disposé en série entre les deux éléments et d'au moins un dispositif amortisseur (7) fixé en parallèle audit ensemble pour assurer une filtration et une atténuation de l'onde vibratoire incidente.

3. Dispositif de filtrage et d'atténuation selon la revendication 2, **caractérisé en ce que** le dispositif amortisseur (7) est constitué de deux armatures rigides distinctes (4, 5) permettant d'assurer ponctuellement ou continûment des fonctions de déviation, éventuellement par un effet de bras de levier, d'amplification des ondes vibratoires engendrées par l'ensemble de lames élastiques (1) vers un matériau dissipatif (6) interposé entre lesdites armatures, ledit matériau dissipatif (6) assurant un amortissement dudit ensemble de lames élastiques.

4. Dispositif de filtrage et d'atténuation selon la revendication 2 ou 3, **caractérisé en ce que** le dispositif dissipatif (7) présente un profil linéique et est constitué d'un ensemble d'armatures rigides (4, 5) alignées et fixées par leurs bases sur au moins une lame (1), ou tout autre structure vibrante, et indépendantes entre-elles, de telle façon que leurs mouvements relatifs, correspondant à une amplification par effet de bras de levier de la réponse vibratoire de la structure d'interface (10), soient transmis par les extrémités desdites armatures rigides (4, 5) au matériau dissipatif (6).

5. Dispositif de filtrage et d'atténuation selon la revendication 4, **caractérisé en ce que** le dispositif amortisseur (7) présente un profil linéique et volumique et est constitué d'un ensemble d'armatures rigides (44, 45) alignées et fixées par leurs bases sur au moins une lame (1), ou tout autre structure vibrante, et indépendantes entre elles de telle façon que leurs mouvements relatifs, correspondant à une amplification par effet de bras de levier de la réponse vibratoire de la structure d'interface (10), soient transmis par les extrémités des armatures (44, 45) à un composant dissipatif (6), sur lequel est montée une plaque de contrainte (8a, 8b), plane ou non, continue ou non, pour transférer l'énergie vibratoire vers l'ensemble d'armatures (44, 45).

6. Dispositif de filtrage et d'atténuation selon la revendication 2, **caractérisé en ce que** le dispositif amortisseur (7) de profil surfacique est constitué d'une structure (50) à raideur adaptée, isotrope ou non, continue ou non, homogène ou non, fixée rigidement sur au moins une lame (1), ou tout autre élément vibrant, tel que les ondes vibratoires déviées, localisées et amplifiées par sa structure interne soient transmises par la face supérieure (50b) de ladite structure à un composant dissipatif (6) lui-même contraint sur sa surface supérieure par une plaque (27) continue ou localement discontinue, apte à assurer au travers du composant dissipatif (6) le transfert des énergies vibratoires vers ladite structure (50).

7. Dispositif de filtrage et d'atténuation selon la revendication 2, **caractérisé en ce que** le dispositif amortisseur (7) est de révolution et est constitué d'un ensemble d'armatures rigides (22) réparties cycliquement ou non autour d'une partie centrale (9) et fixées rigidement ou non à une extrémité sur au moins une lame (1) ou toute autre structure vibrante d'un côté, et indépendant à l'autre extrémité, de façon que les mouvements relatifs de ces armatures soient transmis à des composants dissipatifs (25), et de l'autre côté à une plaque de contrainte (27), continue ou non, apte à assurer au travers des composants dissipatifs le maintien de l'ensemble des armatures (22).

8. Dispositif de filtrage et d'atténuation selon la revendication 2, **caractérisé en ce que** le dispositif amortisseur (15b) monté entre les éléments (2, 3) est composé d'un ensemble élastique d'au moins deux sous-ensembles (12, 13) à profil évolutif continu ou non, ledit dispositif amortisseur présentant une géométrie interne apte à réaliser une déviation, éventuellement une amplification et une localisation des vibrations pour assurer une atténuation de la réponse vibratoire dudit ensemble élastique, et **en ce que** ledit ensemble élastique présente en même temps une fonction de support statique suffisamment rigide, et des fonctions dynamiques de filtrage à caractéristiques variables suivant le niveau du chargement appliqué et définissant une surface de contact évolutive (18, 19), aux extrémités (17) entre les sous-ensembles (12, 13), lesdits sous-ensembles étant complétés par une zone (15a) dans laquelle sont insérés les composants dissipatifs (6).

9. Dispositif de filtrage et d'atténuation selon la revendication 8, **caractérisé en ce que** lesdits sous-ensembles se présentent sous la forme de lames élastiques (14, 16) présentant une raideur potentiellement non linéaire conférée par leur profil géométrique évolutif pour assurer un contact progressif de la lame (16) avec le profil (18) complémentaire de l'autre lame (19), afin d'assurer une fréquence de filtrage évolutive et un débattement relatif maîtrisé desdites lames en fonction de la charge dynamique appliquée.

10. Dispositif de filtrage et d'atténuation selon la revendication 7 ou 8, **caractérisé en ce que** le dispositif amortisseur (7) est de révolution et comprend au moins une lame élastique (31) reliée rigidement au second élément (3) et au moins une lame élastique (32) reliée rigidement au premier élément (2), les lames (31, 32) étant au niveau de leurs extrémités libres reliées entre elles par l'intermédiaire d'un anneau (30) élastique ou non et enroulées autour des couches de composants dissipatifs (6), et assurant ainsi en fonction de la charge dynamique appliquée la fonction de filtrage et d'atténuation non linéaire.

11. Dispositif de filtrage et d'atténuation selon la revendication 10, **caractérisé en ce que** les lames élastiques (31, 32) présentent une raideur potentiellement non linéaire grâce à leur profil géométrique évolutif et par le contact progressif entre les lames (31, 32) dont les profils sont mutuellement complémentaires de leur déformation maximale admissible respective, pour assurer en fonction de la charge dynamique appliquée la fréquence de filtrage évolutive et un débattement relatif maîtrisé voire limité des éléments (2,3).

12. Dispositif de filtrage et d'atténuation selon l'une des revendications 2 à 11, **caractérisé en ce que** le composant dissipatif (6) réalise la conversion de l'énergie vibratoire en une autre forme d'énergie, par exemple thermique par frottement entre matériaux ou avec des matériaux viscoélastiques, électrique avec des matériaux piézoélectriques, magnétique avec des matériaux magnéto-strictifs, ou toute autre forme d'énergie.

13. Dispositif de filtrage et d'atténuation selon l'une des revendications 2 à 11, **caractérisé en ce que** la structure d'interface (10) présente au moins deux dimensions et peut être formé par des assemblages de poutres, de barres droites ou courbes, de volumes pleins, de plaques planes ou de formes plus complexes et **en ce que** ses propriétés élastiques sont extraites à partir de matériaux élastiques, métalliques ou non, homogène ou non, isotropes ou anisotropes.

14. Dispositif de filtrage et d'atténuation selon l'une des revendications 2 à 13, **caractérisé en ce que** le dispositif amortisseur (7) de profil surfacique et notamment la structure (50) intègre des propriétés d'isolation thermique et acoustique telles que par exemple des mousses alvéolaires ou composites, permettant audit dispositif amortisseur (7) de conserver une performance amortissante sur une large gamme de température et de posséder, en plus, les performances intrinsèques d'un écran acoustique et d'un isolant thermique.

## Claims

1. A process to damp and filter the amplitude of mechanically-originated vibrations between a first element (2) subjected to an incident vibratory wave and a second element (3) to be decoupled, said device providing a filtration of the incident vibratory wave, this filtration function being achieved by means of an interface structure (10) which mass is that of the first element (2) and its elasticity is that of at least one leaf spring (1) or component, connecting the two elements (2, 3), **characterised in that** the said function is associated with a damping provided by the association of a suspension assembly mounted in series with a damping device (7) attached in parallel of the suspension by means of the said at least one leaf spring (1), with addition of damping of the filtered vibratory wave transmitted to the said element (3) over a very wide band of frequency and mechanical load amplitude applied to the element (2).

2. A device to filter and damp the vibrations between a first element (2) subjected to an incident vibratory wave and a second element (3) radiating a filtered vibratory wave, comprising an interface structure (10) to transfer vibratory energy, **characterised in** the that the said interface structure (10) is constituted by an assembly of leaf springs (1) provided in series between the two elements and of at least a damping device (7) attached in parallel to the said assembly to ensure a filtration and a damping of the incident vibratory wave.

3. A filtering and damping device according to Claim 2, **characterised in that** the damping device (7) is constituted by two separate rigid frames (4, 5) ensuring, punctually or continuously, deflection functions, if required by a lever arm effect, of amplification of the vibratory waves generated by the assembly of the leaf springs (1) towards a dissipative material (6) positioned between the said frames, said dissipative component (6) providing damping for the leaf springs.

4. A filtering and damping device according to Claim 2 or 3, **characterised in that** the damping device (7) has a lineic profile and is constituted by an assembly of rigid aligned frames (4, 5), arranged and attached by their bases to at least one leaf spring (1), or to any other vibrating structure, and independent of one another, such that their relative movements, corresponding to an amplification by lever arm effect of the vibratory response of the interface structure (10), are transmitted by the ends of the said frame assembly (4, 5) to a dissipative material (6).

5. A filtering and damping device according to Claim 4, **characterised in that** the damping device (7) has a lineic and volumic profile and is made of an assembly of rigid frames (44, 45), aligned and attached at their base to at least a leaf spring (1) or to any other vibrating structure, and separated from one another in such a manner that their relative movements corresponding to an amplification by lever arm effect of the vibratory response of the interface structure (10), are transmitted by the ends of the said frame assembly (44, 45) to a dissipative material (6), on which a stress plate (8a, 8b), plan or not, continuous or not is mounted to transfer the vibratory energy towards the assembly of frames (44, 45).

6. A filtering and damping device according to Claim 2, **characterised in that** the damping device (7) of surface profile is constituted by a structure (50) of adapted stiffness, isotropic or not, continuous or not, homogenous or not, rigidly attached to at least one leaf spring (1), or to any other vibrating element, such that the vibratory waves, deflected, located and amplified by its internal structure, are transmitted by its upper face (50b) of the said structure to a dissipative material (6), itself stressed on its upper face by a continuous or locally discontinuous plate (27), able to ensure the transfer via the dissipative component (6) of vibratory energies towards the said structure (50).

7. A filtering and damping device according to Claim 2, wherein the damping device (7) is of revolution type and constituted by an assembly of rigid frames (22), spaced cyclically or not around a central part (9) and attached rigidly or not at one end to at least a leaf spring (1) or to any other vibratory structure, and free at the other end, so that the relative movements of these frames are transmitted to dissipative materials (25), and at the other end to a continuous or discontinuous stressed plate (27) able, through the dissipative materials, to ensure the retention of the rigid frames (22).

8. A filtering and damping device according to Claim 2, **characterised in that** the damping device (15b) provided between the two elements (2, 3) comprises an elastic assembly of two sub-assemblies (12, 13) having a continuous or discontinuous evolutive profile, said device being provided with an internal geometry able to insure a deviation, eventually an amplification and a location of the vibrations to insure a reduction of the vibratory response of said elastic assembly, and **in that** said elastic assembly has at same time a static support function notably rigid, and dynamic filtering functions with variable characteristics depending on the level of the load to be applied and defining a evolutive contact surface (18, 19) to the ends (17) between the sub-assemblies (12, 13), said sub-assemblies being completed by a zone (15a) in which the dissipative materials (6) are inserted.

9. A filtering and damping device according to Claim 8, **characterised in that** the said sub-assemblies are made of elastic leaf springs (14, 16) having a potentially non-linear stiffness conferred by their evolutive geometric profile to ensure a gradual contact of the leaf spring (16) with the matching profile (18) of the other leaf spring (14), to ensure an evolutive filtering frequency and controlled relative motion space of the said leaves according to the dynamic load applied.

10. A filtering and damping device according to Claim 7 or 8, **characterised in that** the damping device (7) is of revolution type and is composed of at least one elastic leaf spring (31) rigidly connected to the element (3) and at least one elastic leaf spring (32) rigidly connected to the first element (2), the leaf springs (31, 32) being connected together at their free ends by means of a ring (30), elastic or not, and wound around of layers of dissipative materials (6) and ensure then according to the dynamic load applied the non-linear filtering and damping function.

11. A filtering and damping device according to Claim 10, **characterised in that** the elastic leaf springs (31, 32) have a potentially non-linear stiffness thanks to their evolutive geometric profile and by the gradual contact between the leaf springs (31, 32) whose profiles reciprocally match their respective admissible maximal deformation, to ensure, depending on the dynamic load applied, the evolutive filtering frequency and a controlled or even limited relative motion space of the elements (2, 3).

12. A filtering and damping device according to one of Claims 2 to 11, **characterised in that** the dissipative material (6) converts the vibratory energy into another form of energy, for example heat energy by friction between materials or with viscoelastic materials, electrical energy with piezoelectric materials, magnetic energy with magnetostrictive materials, or any other form of energy.

13. A filtering and damping device according to one of Claims 2 to 11, **characterised in that** the interface structure (10) has at least two dimensions and may be formed by assemblies of beams, straight or curved bars, solid volumes, plane plates or more complex shapes and **in that** its elastic properties stem from elastic materials, metallic or not, homogeneous or not, isotropic or anisotropic.

14. A filtering and damping device according to one of Claims 2 to 13, **characterised in that** damping device (7) of surface profile and particularly the structure (50) integrates the properties of thermal and acoustic insulation, such as for example cellular foam, or cork-based composites, enabling the damping device (7) to preserve damping efficiency over a wide temperature range and to possess, in addition, the intrinsic performances of an acoustic screen and thermal insulator.

## Patentansprüche

1. Verfahren zur Dämpfung und Filterung der Amplitude von Schwingungen mechanischen Ursprungs zwischen einem ersten (2) und einem zweiten (3) Strukturelement, die zu entkoppeln sind, wobei das genannte Verfahren eine Filterung der einfallenden Schwingungswelle bewerkstelligt, wobei diese Filterfunktion durch eine Anschlussstruktur (10) erzielt wird, deren Masse diejenige des ersten Elements (2) ist und deren Elastizität diejenige von wenigstens einer Lamelle (1) oder eines Bauteils ist, welches die Elemente (2, 3) verbindet, **dadurch gekennzeichnet, dass** die genannte Funktion mit einer Dämpfung verknüpft ist, die durch die Verknüpfung einer Serienaufhängung mit einer parallel zur Aufhängung mittels wenigstens einer genannten Lamelle (1) montierten Dämpfungseinrichtung (7) durch Erbringung von Dämpfung der gefilterten Schwingungswelle, die auf das genannte Element (3) übertragen wird, über ein sehr weites Frequenz- und Amplitudenband der auf das Element (2) aufgebrachten mechanischen Kräfte erreicht wird.

2. Vorrichtung zur Filterung und Dämpfung von Schwingungen zwischen einem ersten Element (2), das einer einfallenden Schwingungswelle unterliegt, und einem zweiten Element (3), das eine gefilterte Schwingungswelle ausstrahlt, wobei die genannte Vorrichtung eine Anschlussstruktur (10) zur Übertragung von Schwingungsenergie umfasst, **dadurch gekennzeichnet, dass** die genannte Anschlussstruktur (10) von einer Einheit von elastischen Lamellen (1), die in Reihe zwischen den beiden Elementen angeordnet sind, und wenigstens einer Dämpfungsvorrichtung (7) gebildet wird, die parallel zu der genannten Einheit befestigt ist, um eine Filterung und eine Dämpfung der einfallenden Schwingungswelle zu gewährleisten.

3. Vorrichtung zur Filterung und Dämpfung nach Anspruch 2, **dadurch gekennzeichnet, dass** die Dämpfungsvorrichtung (7) von zwei verschiedenen, starren Beschlägen (4, 5) gebildet wird, die es ermöglichen, punktuell oder fortlaufend Funktionen der Ablenkung, eventuell durch eine Hebelarmwirkung der Verstärkung der durch die Einheit von elastischen Lamellen (1) erzeugten Schwingungswellen zu einem dämpfenden, zwischen die genannten Beschläge eingefügten Material (6) zu gewährleisten, wobei das genannte dämpfende Material (6) eine Dämpfung der genannten Einheit von elastischen Lamellen gewährleistet.

4. Vorrichtung zur Filterung und Dämpfung nach Anspruch 2 oder 3, **dadurch gekennzeichnet, dass** die Dämpfungsvorrichtung (7) ein lineares Profil aufweist und von einer Einheit von starren Beschlägen (4, 5) gebildet wird, die auf wenigstens einer Lamelle (1) oder jeder anderen schwingenden Struktur und unabhängig voneinander mit ihren Fußteilen derartig ausgerichtet und befestigt sind, dass ihre relativen Bewegungen, die einer Verstärkung durch die Hebelarmwirkung des Schwingungsverlaufs der Anschlussstruktur (10) entsprechen, über die Enden der genannten starren Beschläge (4, 5) an das dämpfende Material (6) geführt werden.

5. Vorrichtung zur Filterung und Dämpfung nach Anspruch 4, **dadurch gekennzeichnet, dass** die Dämpfungsvorrichtung (7) ein lineares Volumenprofil aufweist und von einer Einheit von starren Beschlägen (44, 45) gebildet wird, die auf wenigstens einer Lamelle (1) oder jeder anderen schwingenden Struktur und unabhängig voneinander mit ihren Fußteilen derartig ausgerichtet und befestigt sind, dass ihre relativen Bewegungen, die einer Verstärkung durch die Hebelarmwirkung des Schwingungsverlaufs der Anschlussstruktur (10) entsprechen, über die Enden der starren Beschläge (44, 45) an ein dämpfendes Bauteil (6) geführt werden, an dem eine ebene oder nicht ebene, kontinuierliche oder nicht kontinuierliche Spannungsplatte (8a, 8b) montiert ist, um die Schwingungsenergie zur Einheit von Beschlägen (44, 45) abzuführen.

6. Vorrichtung zur Filterung und Dämpfung nach Anspruch 2, **dadurch gekennzeichnet, dass** die Dämpfungsvorrichtung (7) mit Oberflächenprofil von einer Struktur (50) mit angepasster, isotroper oder nicht isotroper, kontinuierlicher oder nicht kontinuierlicher, homogener oder nicht homogener Steifigkeit gebildet wird, die starr auf wenigstens einer Lamelle (1) oder jedem anderen schwingenden Element befestigt ist, so dass die von ihrer inneren Struktur abgelenkten, lokalisierten und verstärkten Schwingungswellen durch die obere Fläche (50b) der genannten Struktur an ein dämpfendes Bauteil (6) geführt werden, welches selbst an seiner oberen Fläche durch eine kontinuierliche oder örtlich diskontinuierliche Platte (27) eingespannt und geeignet ist, um die Übertragung der Schwingungsenergie über das dämpfende Bauteil (6) hinweg zur genannten Struktur (50) zu gewährleisten.

7. Vorrichtung zur Filterung und Dämpfung nach Anspruch 2, **dadurch gekennzeichnet, dass** die Dämpfungsvorrichtung (7) dreht und von einer Einheit aus starren Beschlägen (22) gebildet wird, die zyklisch oder nicht zyklisch um einen zentralen Abschnitt (9) verteilt sind und starr oder nicht starr an einem Ende auf wenigstens einer Lamelle (1) oder jeder anderen schwingenden Struktur und unabhängig vom anderen Ende einerseits derartig befestigt sind, dass die relativen Bewegungen dieser Beschläge auf dämpfende Bauteile (25) übertragen werden, und andererseits an einer kontinuierlichen oder nicht kontinuierlichen Einspannplatte (27) befestigt sind, die geeignet ist, das Festhalten der Einheit aus Beschlägen (22) über die dämpfenden Bauteile hinweg zu gewährleisten.

8. Vorrichtung zur Filterung und Dämpfung nach Anspruch 2, **dadurch gekennzeichnet, dass** die zwischen den Elementen (2, 3) montierte Dämpfungseinrichtung (15b) von einer elastischen Einheit von wenigstens zwei Unterbaugruppen (12, 13) mit kontinuierlich oder nicht kontinuierlich erweiterbarem Profil zusammengesetzt ist, wobei die genannte Dämpfungsvorrichtung eine innere Geometrie aufweist, die geeignet ist, eine Ablenkung, eventuell eine Verstärkung und eine Lokalisierung der Schwingungen zu bewerkstelligen, um eine Dämpfung des Schwingungsverlaufs der genannten elastischen Einheit zu gewährleisten, und dass die genannte elastische Einheit gleichzeitig eine ausreichend steife, statische Stützfunktion und dynamische Filterfunktionen mit variablen Eigenschaften entsprechend dem Niveau der aufgebrachten Belastung aufweist und eine erweiterbare Kontaktfläche (18, 19) an den Enden (17) zwischen den Unterbaugruppen (12, 13) definiert, wobei die genannten Unterbaugruppen von einem Bereich (15a) ergänzt werden, in dem die dämpfenden Bauteile (6) eingefügt sind.

9. Vorrichtung zur Filterung und Dämpfung nach Anspruch 8, **dadurch gekennzeichnet, dass** die genannte Unterbaugruppen sich in der Form von elastischen Lamellen (14, 16) darstellen, die eine potenziell nicht lineare Steifigkeit aufweisen, die durch ihr veränderbares geometrisches Profil verliehen wird, um einen progressiven Kontakt der Lamelle (16) mit dem Profil (18), das zur anderen Lamelle (14) komplementär ist, zu gewährleisten, um eine veränderbare Filterfrequenz und eine kontrollierte relative Auslenkung der genannten Lamellen in Abhängigkeit der aufgebrachten dynamischen Belastung zu gewährleisten.

10. Vorrichtung zur Filterung und Dämpfung nach Anspruch 7 oder 8, **dadurch gekennzeichnet, dass** die Dämpfungsvorrichtung (7) dreht und wenigstens eine elastische Lamelle (31), die starr mit dem zweiten Element (3) verbunden ist, und wenigstens eine elastische Lamelle (32) umfasst, die starr mit dem ersten Element (2) verbunden ist, wobei die Lamellen (31, 32) im Bereich ihrer freien Enden mit Hilfe eines elastischen oder nicht elastischen Rings (30) miteinander verbunden und um Schichten dämpfender Bauteile (6) gewickelt sind und so in Abhängigkeit der aufgebrachten dynamischen Belastung die Aufgabe von Filterung und nicht linearer Dämpfung gewährleisten.

11. Vorrichtung zur Filterung und Dämpfung von Schwingungen nach Anspruch 10, **dadurch gekennzeichnet, dass** die elastischen Lamellen (31, 32) Dank ihres veränderbaren, geometrischen Profils und durch den progressiven Kontakt zwischen den Lamellen (31, 32), deren Profile gegenseitig komplementär zu ihrer jeweiligen maximal zulässigen Verformung sind, eine potenziell nicht lineare Steifigkeit aufweisen, um in Abhängigkeit der aufgebrachten dynamischen Belastung die veränderbare Filterfrequenz und eine kontrollierte, ja sogar begrenzte relative Auslenkung der Elemente (2,3) zu gewährleisten.

12. Vorrichtung zur Filterung und Dämpfung nach einem der Ansprüche 2 bis 11, **dadurch gekennzeichnet, dass** das dämpfende Bauteil (6) die Umwandlung der Schwingungsenergie in eine andere Form von Energie bewerkstelligt, zum Beispiel thermische durch Reibung zwischen Materialien oder mit viskoelastischen Materialien, elektrische mit piezoelektrischen Materialien, magnetische mit magnetostriktiven Materialien oder jede andere Form von Energie.

13. Vorrichtung zur Filterung und Dämpfung nach einem der Ansprüche 2 bis 11, **dadurch gekennzeichnet, dass** die Anschlussstruktur (10) wenigstens zwei Dimensionen aufweist und von einer Zusammenstellung von Balken, geraden oder gebogenen Stäben, vollen Volumen, ebenen Platten oder Platten mit komplizierteren Formen gebildet werden kann, und dass ihre elastischen Eigenschaften ausgehend von metallischen oder nicht metallischen, homogenen oder nicht homogenen, isotropen oder anisotropen, elastischen Materialien gewonnen werden.

14. Vorrichtung zur Filterung und Dämpfung nach einem der Ansprüche 2 bis 13, **dadurch gekennzeichnet, dass** die Dämpfungsvorrichtung (7) mit Oberflächenprofil und insbesondere die Struktur (50) Eigenschaften der thermischen und akustischen Isolation einbezieht, wie zum Beispiel wabenartige Schaumstoffe oder Verbundschaumstoffe, die es der genannten Dämpfungsvorrichtung (7) ermöglichen, eine dämpfende Leistungsfähigkeit über einen weiten Temperaturbereich zu bewahren und darüber hinaus die intrinsischen Leistungsfähigkeiten eines akustischen Schirms und einer Wärmedämmung zu besitzen.
